# EUROPEAN PATENT SPECIFICATION

(11) **EP 1 577 265 B1**
(45) Date of publication and mention of the grant of the patent: **15.10.2008**
(21) Application number: 04006622.7
(22) Date of filing: 19.03.2004
(51) Int. Cl.: C01F 7/42, B01J 19/08, C06B 47/14

(54) **Production of fine powder of aluminium oxide**
Herstellung von feinem Aluminiumoxidpulver
Production de poudre fine d'alumine

(43) Date of publication of application: 21.09.2005
(73) Proprietor: CUF-Companhia Uniao Fabril, SGPS, S.A., 1200-244 Lisboa (PT)
(72) Inventor: Silva, Joao Manuel Calado Da, 1200-244 Lisboa (PT); Castro, Pedro De Mello E, 1200-244 Lisboa (PT); Mendes, Ricardo c/o Ledap-(Lab.de En. e Detonica), 3150-277 Condeixa a Nova (PT); Campos, Jose c/o Ledap-(Lab.de En. e Detonica), 3150-277 Condeixa a Nova (PT)
(74) Representative: Ferreira, Maria Silvina

(56) References cited:
- GB-A- 2 120 228
- US-A- 4 698 105
- US-A- 5 855 827

## Description

### SCOPE OF THE INVENTION

The present invention relates to production of fine aluminium oxide powder, essentially in the alpha crystalline form, by a cyclic oxidation reaction of granulated aluminium mixed with an oxidant component, using the explosion of this mixture initiated with a non-contaminant electric discharge.

### BACKGROUND OF THE INVENTION

Alumina or Aluminium oxide (Al₂O₃) is an inorganic material part of the so-called technical or engineering ceramics family, formed by pure or almost pure composites of oxides, carbides or nitrites.

Its main properties are:
- High hardness,
- High rigidness,
- Resistance to chemical attach,
- Stability in high temperatures,
- Bio-inercy
- High constant dielectric

Alumina is a ceramic material, generally used as base component for abrasives, refractors, cutting tools, etc., since the 80's it was found new applications in high technologies, mainly in electric and electronic industries, thermic motors, *chips* for circuits, bio-ceramics, etc.

Ceramics are usually processed from powder of fine granulometry, with a certain phase and morphology. Its process generally involves its compaction, pressing or sintering, according to the pretend final properties. It also can be used in coatings, allowing its direct projection over the surfaces that are to be covered. The growing tendency of the markets requires a super fine alumina powder (with micro and nano average granules) with higher pureness range degrees (> 99,8%).

The classic process of alumina powder production (Al₂O₃) is done from the refining of bauxite, by the so-called Bayer process (reaction of bauxite with caustic soda, in high temperature, to conversion to sodium aluminate. After separation of insoluble elements, aluminium hydroxide is precipitate from the aluminate solution. After partially dry, the aluminium hydroxide is calcined in furnaces, obtaining this way, a Al₂O₃ with a nominal content of 99,5%, constituting the oxide of sodium (Na₂O) the dominant impurity. Still, these 0,5% impurities can be reduced during refining or calcined, running over procedures which allow to obtain the alpha alumina (the most stable and important crystalline form also known as *corundum),* with lower contents of Na₂O.

Do to growing tendency of the markets for the use of super fine alumina powders with (micro and nano average granulometry scales) and higher pureness degrees (> 99,8%), it carne up several alternative methods to Bayer process. Even so, till now, they have no commercial expression, since final prices of this alumina are comparatively higher and production capabilities are limited.

Between alternative methods the most relevant are:
**Plasma synthesis.** Vaporisation of a pure aluminium metallic wire, in an oxygen atmosphere, due to the passage of a high electric current, getting the conversion to oxide after the successive cooling and condensation.
**Solution techniques (sol-gel, spray drying and precipitation).** Catalysed by a chlorinated organic base, pure aluminium reacts with an aqueous solution of ammonium hydroxide. The aluminium hydroxide resultant is then processed through calcination and grinding. in order to get final alpha alumina.
**Combustion.** Here the aluminium oxide is obtained by combustion, in an oxidant atmosphere, of pure aluminium powder, after vaporisation by high temperatures. Pure oxides, result from the combustion and cooling.
**PDS (Pulse Detonation System).** Based on a process where alumina is obtained from the detonation, in a gaseous phase, of a suspension in the air of aluminium powder.

### SUMMARY OF THE INVENTION

This invention refers to an industrial process composed by the following stages:
a) Introduction of granulated aluminium mixed in an oxidant component, in the interior of a reactor.
b) Initiation of the explosion of reaction in the interior of the mixture, with or without wire or aluminium - film, due to the passage of a high electric current pulse, obtained by capacitive discharge.
c) Explosion products are quickly injected in a humid chamber.
d) Cooling and gathering aluminium oxide powder by humid way.
e) Cyclic restart of stages (a), (b), (c) and (d).
f) Unitary operations of final qualification: sedimentation, filtering, drying, packaging, etc.

This process has the following innovations:
**1 - USE OF CYCLIC EXPLOSION OF AN OXIDANT COMPONENT (SOLID OR LIQUID), MIXED WITH ALUMINIUM, TO OBTAIN INDUSTRIAL ALPHA ALUMINA**.
   It must be referred that aluminium powder or granulated is, since ever, added to civil or military explosives, in order to increase global released energy, precisely by the high enthalpy formation of aluminium oxide.
   Generally it is accepted that solid Al, with a considerable ignition delay, does not take part in initial reaction but reacts immediately in the post-detonation stage, with the reaction products - (generally OH, H₂O and CO, CO₂). This way a considerable part of the aluminium (20-30%) come up in the final products of detonation, either as non-burned or as AlO and other metallic oxides, making evidence of an incomplete reaction.
   In the proposed process, due to explosive composition, - confining conditions, - reactor configuration, - non contamination of the initiation process and to subsequent injection and immediate cooling of the reaction products, it is possible to verify the absence of Al contaminants in the formed alumina powders. This fact seems to suggest that the process of aluminium oxidation takes place at the post reaction zone and in the gaseous phase, generating a quick condensation and interrupted - with the injection on the humid chamber of gathering.
**2 - THE ECONOMIC RENTABILITY** of that same process proceeds from the transforming capacity of granulated aluminium with high granulometry, for example between 150-450 µm, in alumina with d₅₀ less than to 5 µm, which represents a decreasing factor of, at least, 50 times to the initial particles mean dimension. This decreasing is very relevant in the reagents cost - the aluminium market price changes on the contrary to its granulometry, besides its pureness degree, such as:
   - Al (150-450 µm) 99,8%: = base 100
   - Al (5 µm) 98%: = 1000
   This means that, coming up from a lower price and high pureness Al (e.g. 150-450 µm), with this system it is possible to obtain micro and nano alumina with high pureness and value. The proposed process allows the use of granulated aluminium, what is not possible with the referred competitors processes, which require the use of aluminium with mean granulometry of microns array, reacting with air oxygen, in combustion or detonation regime.
**3 - THE INITIATION SYSTEM**, direct and repetitive, of the condensed explosive mixture, is done due to the passage of a high electric current, generated by the discharge of one or more capacitors. This initiation process can be originated either:
   a) direct electric discharge, over the composition with aluminium, of a high electric current (thousands of kA). This electric discharge causes the aluminium vaporisation, generating a gas, partially ionised, which with the oxidant allows the explosion initiation.
   b) electric discharge over a exploding bridge wire. Since discharge time of electric energy over the bridge wire is very small (when compared to energy dissipation time, by ohm heating of the bridge wire itself), it can be discharged a large quantity of energy in the bridge wire. This discharge originates its fast vaporisation (thousands of ns) generating a gas, partially ionised, designed as metallic plasma, which initiates the (explosive) blasting composition.

Both methods are alternatives to the classic initiation with detonator, being the key to the construction of an industrial system, non-contaminant, and safe, able to be automated in order to achieve high production rates.

### RESULTS

The Figures (1), (2) and (3) show some of the obtained results, from the detonation of granulates aluminium (150 - 400 µm), in an emulsion matrix.

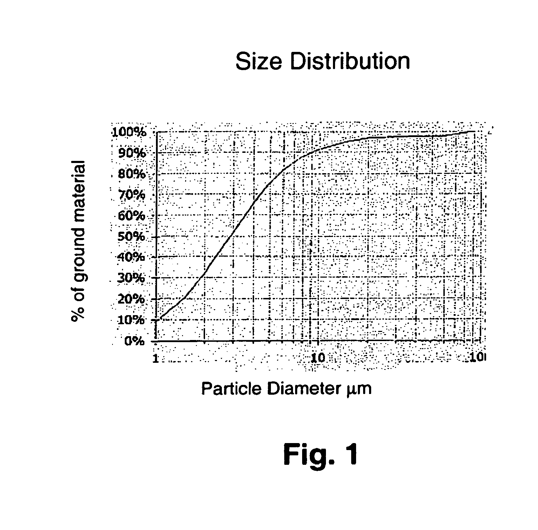

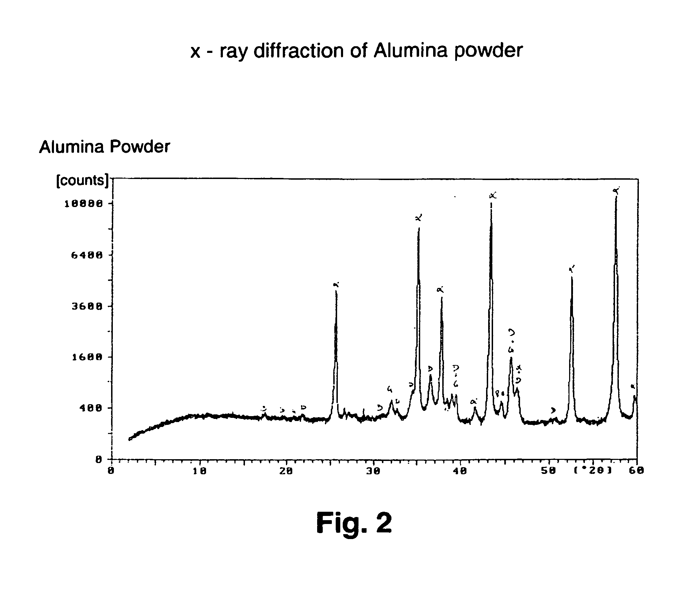

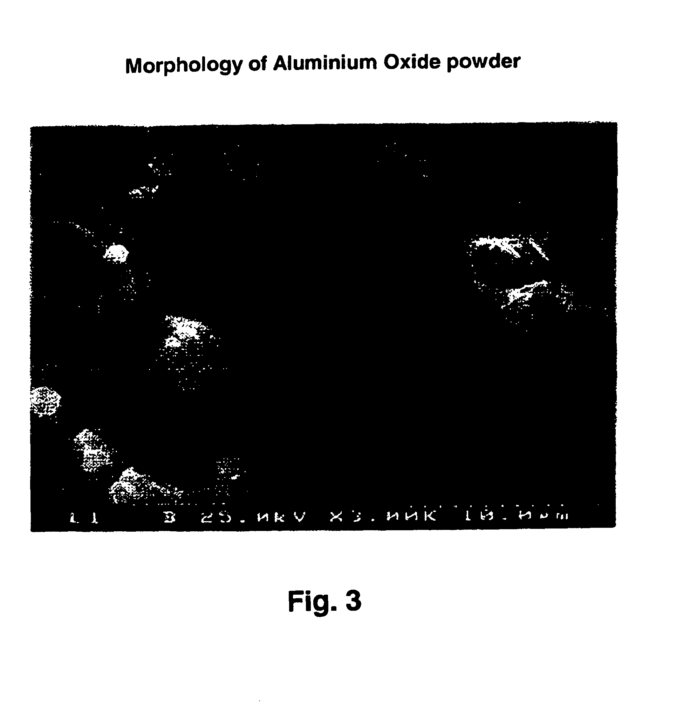

## Claims

1. A process of industrial production, composed by the following steps:
a) Introduction of granulated aluminium mixed with an oxidant component, in the interior of a reactor.
b) Initiation of explosion reaction inside the mixture, with or without wire or resistible film, of aluminium through a high electric current pulse, obtained by capacitive discharge.
c) Explosion products are quickly injected in a humid chamber.
d) Cooling and gathering aluminium oxide powder by humid way.
e) Cyclic restart of stages (a), (b), (c) and (d).
f) Unitary operations of final qualification: sedimentation, filtering, drying, packaging.

2. A process according to claim 1, having an initiation system where the electric discharge takes place directly over the composition.

3. A process according to claim 1, having an initiation system based on an electric current pulse, with the explosion of a metallic bridge when a high electric current pass through it.

4. A process according to claim 1, which transforms a granulated aluminium (> 150 µm) in an oxide with d₅₀ less than to 5 µm, with a reduction factor of at least 50 times between the aluminium diameter introduced in the composition and the obtained alumina.

5. A process according to claim 1, where is obtained alumina with pureness over (> 99,7%) from granulated metallic aluminium (> 99,7%).

6. A process according to claim 1, where is obtained an alumina essentially in the alpha crystalline phase.

## Patentansprüche

1. Ein wirtschaftlicher Produktionsprozess, der aus folgenden Schritten besteht:
a) Einführung des granulierten Aluminiums gemischt mit einer Oxydationsmittelkomponente innerhalb eines Reaktors.
b) Beginn einer Explosionsreaktion innerhalb der Mischung, mit oder ohne Draht- oder Widerstandsfilm, aus dem Aluminium durch hohen elektrischen Strom, von kapazitativer Entladung erhalten.
c) Explosionsprodukte werden schneller in einen feuchten Raum eingespritzt.
d) Abkühlen und Sammeln des Aluminiumoxydpulvers durch feuchte Methoden.
e) Erneuter zyklischer Start der Stadien (a), (b), (C) und (d).
f) Einheitliche Operationen der abschließenden Qualifikationen: Sedimentieren, Filtrieren, Trocknen, Verpackung.

2. Ein Prozess gemäß Anspruch 1, wobei es ein einführendes System gibt, in dem die elektrische Entladung direkt über der Zusammensetzung stattfindet.

3. Ein Prozess gemäß Anspruch 1, wobei das einführende System auf einen elektrischen Strom beruht, mit der Explosion einer metallischen Brücke, wenn hoher elektrischer Strom durchfließt.

4. Ein Prozess gemäß Anspruch 1, der ein granuliertes Aluminium (> 150 µm) in ein Oxyd mit d₅₀ weniger als 5 µm verwandelt, mit einem von wenigstens 50maligen Reaktionsfaktor zwischen den in die Zusammensetzung eingeführten Durchschnitts des Aluminiums und der erhaltenen Aluminiumoxydes.

5. Ein Prozess gemäß Anspruch 1, wobei Aluminiumoxyd mit einer Reinheit von über (> 99,7%) aus granuliertem metallischem Aluminium(> 99,7%) besteht.

6. Ein Prozess gemäß Anspruch 1, wobei Aluminiumoxyd wesentlich in der Alpha-kristallenen Phase besteht.

## Revendications

1. Procédé de production industrielle compose par les étapes suivantes:
a) Introduction de l'aluminium grené mélangé à un composant oxydant dans l'intérieur d'un réacteur.
b) Initiation de la réaction d'explosion dans le mélange, avec ou sans film métallique ou film résistant, d'aluminium a travers d'un courant électrique élevée, obtenu par une décharge capacitive.
c) Produits d'explosion sont rapidement injectés dans une chambre humide.
d) Refroidissement et collecte de la poudre d'alumine par des méthodes humides.
e) Recommencement cyclique des phases (a), (b), (C) et (d).
f) Opérations unitaires de la qualification finale: sédimentation, filtrage, séchage, emballage.

2. Procédé selon revendication 1, qui a un système d'initiation où la décharge électrique a lieu directement au-dessus de la composition.

3. Procédé selon revendication 1, qui a un système d'initiation basé sur un courant électrique, avec l'explosion d'un pont métallique quand le courant électrique élevée passe par lui.

4. Procédé selon revendication 1, qui transforme un aluminium grené (> 150 µm) dans un oxyde avec d₅₀ moins que 5 µm, avec un facteur de réduction au moins de 50 fois entre le diamètre en aluminium présenté dans la composition et l'alumine obtenue.

5. Procédé selon revendication 1, où on obtient l'alumine avec une pureté de plus de (> 99,7%) de l'aluminium métallique grené (> 99,7%).

6. Procédé selon revendication 1, où on obtient une alumine essentiellement dans la phase cristalline alpha.
